# FASCICULE DE BREVET EUROPEEN

(11) **EP 2 842 208 B1**
(45) Date de publication et mention de la délivrance du brevet: **18.03.2020**
(21) Numéro de dépôt: 13723835.8
(22) Date de dépôt: 18.04.2013
(51) Int. Cl.: H02G 3/30, H02G 3/32, B60R 16/02, H01B 7/00, H01R 25/16, B64C 1/40

(54) **HARNAIS DE LIAISON DE RETOUR COURANT, AINSI QUE PROCÉDÉ DE MONTAGE SUR UN CADRE DE FUSELAGE COMPOSITE**
VERBINDUNGSKABELSTRANG FÜR STROMRÜCKFLUSS UND VERFAHREN ZUR MONTAGE AUF EINEM ZUSAMMENGESETZTEN RUMPFGERÜST
CURRENT RETURN CONNECTING LOOM AND METHOD FOR MOUNTING ON A COMPOSITE FUSELAGE FRAME

(30) Priorité: 27.04.2012 FR 1253942
(43) Date de publication de la demande: 04.03.2015
(73) Titulaire: Safran Electrical & Power, 31702 Blagnac Cedex (FR)
(72) Inventeur: BIESSE, Jean-Luc, F-81500 Saint Lieux Les Lavaur (FR); AYME, Arnaud, Camille, F-31200 Toulouse (FR)
(74) Mandataire: Gevers & Orès
(86) Numéro de dépôt international: PCT/FR2013/050864
(87) Numéro de publication internationale: WO 2013/160591

(56) Documents cités:
- EP-A1- 2 218 641
- WO-A1-2007/075934
- DE-A1-102006 052 359
- FR-A1- 2 962 712

## Description

### DOMAINE TECHNIQUE

L'invention concerne un harnais de liaison pour un réseau de retour de courant permettant de raccorder des pièces métalliques, en particulier des réseaux électriques des avions de nouvelle génération à peau constituée par un matériau composite. L'invention se rapporte également à un procédé de montage d'un tel harnais sur un cadre de fuselage d'avion en matériau composite.

Le matériau composite de cette nouvelle génération de peau comporte un matériau hétérogène à base de fibres de carbone. Classiquement, les fonctions d'interconnexion électrique étaient réalisées par la peau en aluminium de l'ancienne génération. Les avionneurs l'utilisaient en effet pour le retour de courant des équipements consommateurs, la mise au même potentiel de toutes les pièces métalliques, la protection CEM (Compatibilité Electromagnétique) de l'installation électrique, et les écoulements des courants de foudre - indirects et induits - et des charges électrostatiques.

L'invention peut également s'appliquer dans toute architecture ou bâtiment de passage de l'électricité nécessitant la maîtrise du retour de courant afin d'assurer la sécurité de cette architecture, en particulier, mais non exclusivement, aux fuselages de cabines passagers d'avion à peau composite.

### ETAT DE LA TECHNIQUE

Les matériaux composites carbone sont de médiocres conducteurs de l'électricité et supportent mal les échauffements provoqués par effet Joule. Un tel revêtement ne peut donc pas être utilisé pour assurer les fonctions ci-dessus.

Pour permettre la mise en oeuvre des fonctions d'interconnexion électrique pour un avion à peau à structure composite, il a alors été conçu une architecture composée de pièces réalisées en métal pour créer en particulier un réseau électrique de retour de courant. Globalement, ce réseau se compose de trois réseaux longitudinaux qui courent le long du fuselage de l'avion :
- un réseau en partie supérieure (plafond composé des pièces métalliques de soutien des coffres à bagage, des chemins de câble et du support central ;
- un réseau en partie médiane, comprenant les rails de siège profilés, les supports métalliques de câble profilés et équivalents,
- un réseau en partie inférieure (plancher) à base du rail cargo métallique profilé et équivalents.

Ces réseaux longitudinaux sont interconnectés transversalement par des pièces métalliques (traverses, bielles de structure, etc.), ou des câbles de section importante ou d'autres éléments électriquement conducteurs. Un maillage efficace d'un réseau de retour de courant est ainsi créé afin de réaliser les fonctions précédentes.

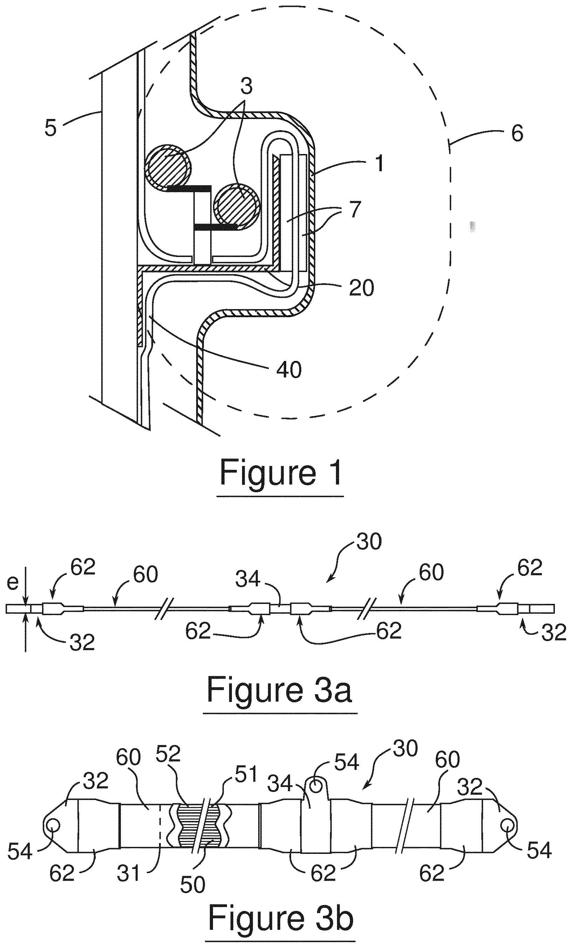

Cependant, l'interconnexion transversale des réseaux de retour de courant présente, comme illustré en figure 1 au niveau de la cabine de passagers - derrière le panneau 1 d'habillage cabine -, des allocations de cheminement extrêmement réduites pour les harnais de câblage électrique 3. Ces cheminements sont de plus localisés le long d'un cadre de structure 20 en matériau composite de fibres de carbone, dit « cadre carbone » monté sur la peau d'avion 5.

Or la délimitation 6 de la protection CEM de ces harnais 3 doit être assurée par leur proximité avec un élément du réseau de retour de courant. L'utilisation d'un câble de grosse section n'est pas adaptée à l'environnement car il nécessite l'éviction d'au moins un harnais de câblage électrique de l'avion pour disposer d'un volume suffisant. Des volumes disponibles 7 se situent de part et d'autre de la protection thermo-phonique 40, entre cette protection et le cadre structural carbone 20 monté sur la peau 5 et/ou entre cette protection et le panneau d'habillage cabine 1.

Des solutions d'insertion dans ce volume 7 avec des éléments de structure adaptée ont été envisagées :
- tissu métallique (toile, grillage, tricotage, méchage, etc.) cocuit et intégré au cadre structural 20,
- tresse métallique plate,
- clinquant métallique contre le cadre de structure 20,
- gaine ouverte blindée provenant des harnais 3,
- plusieurs câbles électriques de petite section.

Pour des questions combinées de conductivité, de faible densité, de coût et d'exigences en termes de performances techniques ainsi que de tenue en environnement avionique, le métal qui convient le mieux est l'aluminium pour le tissu, le clinquant, la tresse ou les câbles de petite section. Pour la gaine blindée le matériau préféré est le cuivre. Cependant, toutes ces solutions présentent de graves inconvénients pour les raisons suivantes.

En ce qui concerne l'adjonction d'un tissu d'aluminium cocuit avec le cadre de structure 20 :
- l'aluminium et le carbone ont des coefficients de dilatation/rétraction très différents voire opposés en fonction de la température : des contraintes internes inacceptables s'installent dans le temps ;
- la compatibilité électrochimique entre le carbone et l'aluminium est très mauvaise et peut générer une corrosion galvanique pouvant entrainer la disparition de l'aluminium ;
- la liaison électrique entre l'aluminium sous forme de tissu et les pièces métalliques du réseau de retour de courant sont extrêmement délicates à réaliser ;
- aucun courant électrique ne devrait passer entre le tissu d'aluminium et le carbone de la structure 20 : une isolation électrique devra être mise en place entre eux.

L'utilisation d'une tresse plate en aluminium pose les problèmes suivants :
- aucune tresse plate en fils d'aluminium nickelés apte à servir de liaison électrique n'existe, en particulier dans le domaine de l'aéronautique ;
- une étanchéité fiable est extrêmement difficile à réaliser pour connecter une tresse, c'est pourquoi une telle tresse n'est pas utilisée dans le domaine aéronautique ;
- un encombrement sensiblement supérieur qu'un câble (environ de 45%) à section efficace équivalente ;
- même nécessité d'une isolation électrique que pour le tissu.

Concernant le clinquant métallique, son intégration sur avion nécessite plusieurs mètres sur un cadre et cette longueur devrait empêcher sa mise en place d'un seul tenant. Une interface électrique supplémentaire est difficilement logeable dans le volume 7 prévu à cet effet. De plus, le clinquant étant issu d'un profilé, le raccordement électrique de deux tronçons est très délicat et l'étanchéité des connexions difficile à assurer de façon fiable et durable. Par ailleurs :
- les problèmes d'incompatibilité électrochimiques déjà évoqués entre l'aluminium et le carbone sont également à considérer pour le clinquant ;
- une visserie supplémentaire est à prévoir pour former des points de fixation sur le cadre structural en carbone ;
- le clinquant est mal adapté pour réaliser le raccordement électrique direct au circuit de retour de courant en partie supérieure et médiane de l'avion : ces connexions nécessitent des câbles de grosse section équipés de cosses, ce qui augmente le nombre d'interfaces électriques et la masse ;
- même nécessité d'une isolation électrique entre l'aluminium et le carbone que pour le tissu et la tresse.

Quant à la gaine ouverte blindée, les conducteurs qui compose le blindage sont actuellement en cuivre et la technologie de tels blindages ne devrait pas être remise en cause : les pièces sur lesquelles ce blindage sont reliés par frettage à leurs extrémités avec des brins de cuivre sont standardisées, alors que des contacts en aluminium poseraient des problèmes d'étanchéité à l'air et formation d'alumine en conséquence. De plus, la protection CEM des torons électriques que recouvre la gaine nécessite peu de cuivre.

Cependant, les raccords et connecteurs prévus pour les gaines de blindage n'ont pas été conçus pour pouvoir accepter le passage de courant spécifié pour les liaisons au réseau électrique de retour de courant. Ainsi, ces gaines ouvertes blindées ne peuvent convenir pour remplacer les câbles de grosse section.

L'utilisation de câbles de petite section en torons, à connecter entre eux et à positionner dans le volume disponible 7, pose les problèmes de fixation entre eux et au cadre structural carbone 20, sans usure des isolants par friction en vibration - la présence des isolants devant neutraliser l'incompatibilité électrochimique aluminium/carbone. Une immobilisation individuelle de ces torons est donc nécessaire : des points de fixation devront être ajoutés sur le cadre, dans l'espace disponible.

De plus, en extrémité, chaque toron doit être étanchéifié séparément afin d'obtenir une étanchéité efficace. Le bilan en masse et en coût est donc très défavorable avec cette solution. En outre, la connectique d'extrémité connue fait intervenir des connecteurs avec un nombre normalisé de câbles, en général six câbles. Dans le cas d'une utilisation de huit ou dix câbles, deux connecteurs et deux installations correspondantes sont alors nécessaires par extrémité : là encore le bilan des masses, de l'encombrement et des coûts reste très défavorable.

Par ailleurs, une connectique intermédiaire implique la coupure des câbles de la ligne principale à chaque dérivation et le dénudage de tous les câbles raccordés à la dérivation pour ne pas créer d'inhomogénéité de passage du courant électrique. Le nombre de connecteurs à prévoir est sensiblement égal au nombre de câbles à raccorder en dérivation. Les mêmes problèmes surgissent : problème de masse, d'encombrement, de coûts et, plus particulièrement ici, de fiabilité avec le nombre important de coupures de câble.

On connait les demandes de brevet WO 2007/075934, FR 2962712 et EP-2218641-A1 qui décrivent des systèmes de retour de courant pour aéronef dont la cellule est en matériau composite. Ils ne montrent pas de nappes de conducteurs présentant une flexibilité suffisante. Une nappe telle que celle décrite dans le document DE-102006052359-A1 permet de proposer une flexiblité appropriée mais n'est pas adaptée à système de retour de courant.

### EXPOSE DE L'INVENTION

L'invention vise alors à réaliser une structure apte à minimiser les problèmes de masse, d'encombrement, de coûts, de fiabilité, d'étanchéité, et de compatibilité électrique et électrochimique. Pour ce faire, l'invention prévoit un harnais selon la revendication 1 à nappe de conducteurs nus globalement en liaison avec des connecteurs.

Plus précisément, la présente invention a pour objet un harnais selon la revendication 1 convenant à la liaison équipotentielle entre des pièces métalliques structurales cheminant le long d'une structure de protection, et situé dans un volume disponible s'étendant entre un cadre transversal, en matériau composite à base de fibres de carbone dit cadre carbone, et un panneau d'habillage pour établir des liaisons équipotentielles entre les parties d'un réseau de retour de courant. Ce harnais comporte des connecteurs intermédiaires, des connecteurs terminaux et un dispositif conducteur constituant une liaison équipotentielle entre les connecteurs intermédiaires de raccord aux pièces métalliques par dérivation sans coupure des conducteurs, et les connecteurs terminaux couplés aux pièces métalliques de retour de courant au moins une enveloppe de protection recouvrant le dispositif et des zones d'extrémité des connecteurs, cette enveloppe étant destinée à assurer la protection mécanique, électrique et électrochimique du harnais en liaison avec la protection thermo-phonique et/ou avec le cadre carbone ou le panneau d'habillage, caractérisé en ce ledit dispositif conducteur est une nappe plate et flexible selon ses directions longitudinale et transversale, formée de conducteurs, non isolés et agencés parallèlement et de manière juxtaposée. Les connecteurs, modulaires et multipoints en référence au nombre de conducteurs et sont liés à des moyens d'étanchéité locaux au niveau de chaque conducteur à connecter.

Selon des modes de réalisation préférés :
- chaque conducteur est constitué d'une multitude de brins élémentaires en aluminium et groupés en toron ;
- les connecteurs sont traités en surface, en particulier par nickelage, étamage, argenture ou équivalent, pour réaliser un assemblage par frettage en ajustement serré avec les pièces correspondantes à raccorder afin d'empêcher une corrosion galvanique ;
- les connecteurs intermédiaires multipoints en liaison avec la nappe et avec les pièces à raccorder sont positionnables en tout point de la nappe par une dérivation en « T » ;
- les connecteurs terminaux et intermédiaires comportent des alvéoles alignées, chaque conducteur étant inséré et fixé dans une alvéole ;
- les alvéoles des connecteurs terminaux sont des cavités borgnes, et les alvéoles des connecteurs intermédiaires sont traversantes ;
- l'enveloppe de protection se compose d'une enveloppe externe recouvrant la nappe et d'une enveloppe commune, emprisonnant les bords des connecteurs et de l'enveloppe externe ;
- l'enveloppe externe est constituée de tronçons en matériau à base de PVF (polyfluorovinyle), PTFE (polytétrafluoroéthylène) ou équivalent, apte à réaliser une protection mécanique, ainsi qu'une isolation électrochimique et électrique avec le cadre carbone et/ou la protection thermo-phonique ou le panneau d'habillage ;
- l'enveloppe commune est constituée de tronçons de gaine polyoléfine thermo-rétractable ou de surmoulages localisés en matériau polymère thermoplastique ou thermodurcissable, aptes à réaliser la protection mécanique de zones d'étanchéité des conducteurs en liaison avec des côtés des connecteurs;
- les moyens d'étanchéité locaux sont constitués de manchons thermo-rétractables entourant les conducteurs enduits de produit d'étanchéité au niveau des zones d'étanchéité, en entrées des connecteurs, de sorte à étanchéifier individuellement chaque conducteur ;
- les connecteurs sont en alliage d'aluminium à faible résistivité.

Avantageusement, les connectiques terminales, intermédiaires et les conducteurs de la nappe sont adaptables en fonction des critères de besoin définis par le constructeur : résistivité des liaisons, intensité des courants de transit et de surintensité, encombrement, nombre de points de fixation et de pièces à raccorder, interfaces mécaniques particulières, etc.

L'invention se rapporte également à un procédé de montage du harnais sur un cadre carbone de fuselage d'avion. Dans ce procédé, un revêtement adhésif double face est collé sur l'enveloppe externe du harnais pour une installation directe de la nappe sur le cadre carbone, la pellicule à peler est progressivement retirée et le harnais appliqué sur le cadre. Le positionnement du harnais est alors assuré et sécurisé par des épingles à ressort venant se ficher en pression dans des logements préalablement formés dans le cadre, et les connecteurs sont solidarisés aux pièces à raccorder. Dans le cas d'une installation de la nappe entre la protection thermo-phonique et l'habillage cabine, des supports rigides et des supports souples de la nappe sont prévus le long de la protection thermo-phonique.

Avantageusement, le harnais est positionné par des épingles à deux branches d'extrémités désaxées vers l'extérieur d'un angle adapté de sorte à rendre l'épingle imperdable des lors qu'elle est installée dans son logement. De plus, le harnais peut également être supporté entre deux connecteurs par des fixations locales, en particulier par enroulement dans des colliers de serrage en liaison avec un élément de structure.

### PRESENTATION DES FIGURES

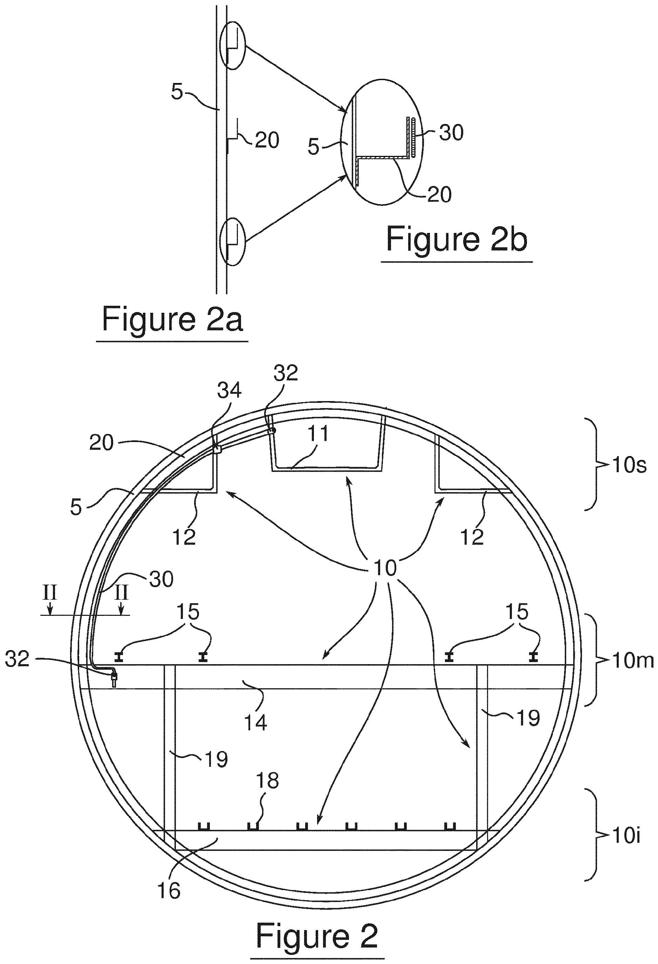

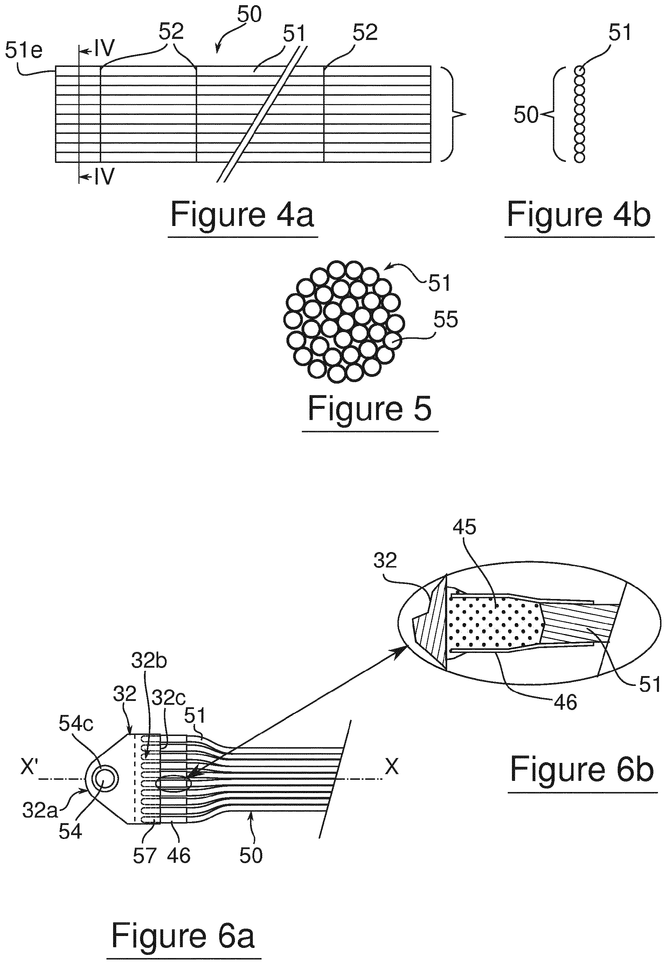

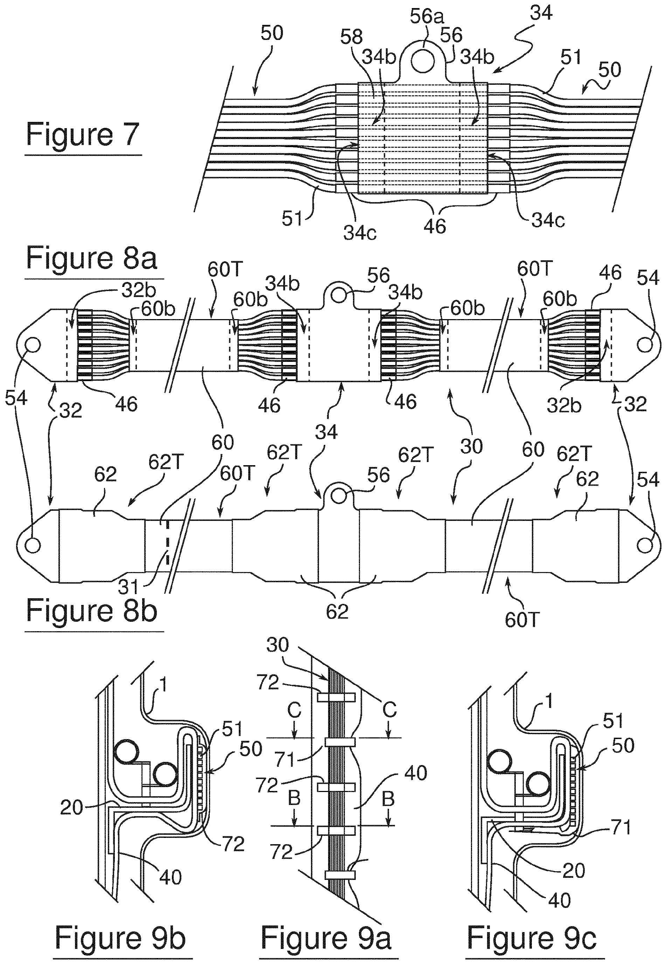

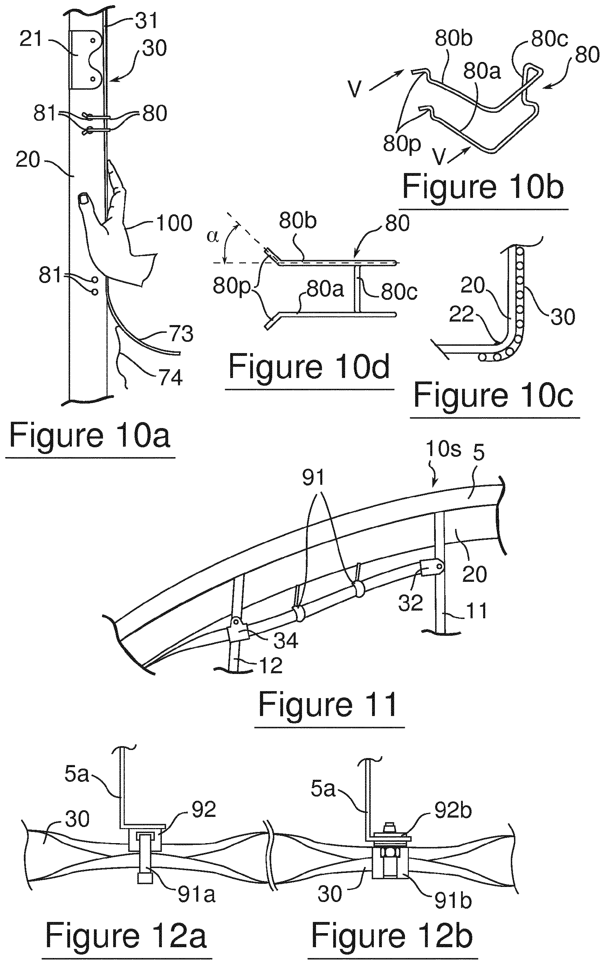

D'autres aspects et particularités de la mise en œuvre de l'invention apparaîtront à la lecture de la description détaillée qui suit, accompagnée de dessins annexés qui représentent, respectivement :
- en figure 1, une vue en coupe longitudinale d'un réseau de retour de courant selon l 'état de la technique (déjà commentée) ;
- en figures 2, 2a et 2b, une vue en coupe transversale, en coupe selon II-II et en agrandissement de cette coupe au niveau d'un cadre carbone, d'une partie de cabine passagers d'avion équipée d'un exemple de harnais selon l'invention ;
- en figures 3a et 3b, des vues de face et supérieure du harnais selon la figure 1 ;
- en figures 4a et 4b, des vues partielles frontale et en coupe IV-IV de la nappe de conducteurs de l'exemple de harnais précédent ;
- en figure 5, une vue en coupe transversale d'un conducteur de la nappe précédente ;
- en figures 6a et 6b, une vue frontale et une vue agrandie d'un exemple de connecteur terminal de harnais en liaison avec des manchons d'étanchéité selon l'invention ;
- en figure 7, une vue supérieure d'un exemple de connecteur intermédiaire de harnais en liaison avec des manchons d'étanchéité selon l'invention ;
- en figures 8a et 8b, deux étapes dans le recouvrement d'une nappe de conducteurs pour former l'enveloppe de protection à la nappe et aux connecteurs ;
- en figures 9a à 9c, des vues frontale (figure 9a) et en coupe (figures 9b et 9c) selon les plans BB et CC d'un montage de harnais sur la protection thermo-phonique avec une alternance appropriée de supports rigides et souples ;
- en figures 10a et 10b, deux vues de profil du montage du harnais sur un cadre carbone, respectivement selon une portion linéaire et une portion coudée de ce cadre ;
- en figures 10c et 10d, des agrandissements d'une épingle de maintien du harnais, respectivement en vues perspective et selon la direction V-V de la figure 10c ;
- en figure 11, un exemple d'installation du harnais précédent en partie supérieure du réseau retour de courant avec des fixations traditionnelles locales et des connexions intermédiaire et terminale, et
- en figures 12a et 12b, deux exemples de fixation par enroulement du harnais dans des colliers particuliers.

### DESCRIPTION DETAILLEE

Des signes de référence identiques ou présentant une racine commune, utilisés dans les différentes figures, se rapportent à des éléments identiques ou techniquement équivalents. Les termes « supérieur », « médian » et « inférieur » se réfèrent au positionnement relatif en mode standard d'utilisation ou de montage. Les termes « longitudinal » et « transversal » qualifient des éléments s'étendant selon une direction et un plan perpendiculaire à cette direction, en particulier « longitudinal » renvoie à l'axe de fuselage d'un avion.

En référence à la coupe transversale de la cabine passagers de la figure 2, la peau d'avion en matériau carbone 5 apparaît sous la forme d'une paroi courbée sur laquelle sont fixées des parties longitudinales supérieure 10s, médiane 10m et inférieure 10i du réseau de retour de courant 10.

La partie supérieure 10s du réseau comporte un support central 11 et des supports latéraux 12 métalliques. Le support central 11 accueille du câblage et du matériel technique, alors que les supports latéraux 12 supportent les coffres à bagages.

La partie médiane 10m se compose d'une traverse métallique 14 sur laquelle sont montés les rails métalliques 15 des sièges passagers.

La partie inférieure 10i comporte une autre traverse métallique 16 de support des rails cargo métalliques 18. Des bielles métalliques de structure 19 relient la traverse métallique médiane 14 et la traverse métallique inférieure 16.

Les parties supérieure, médiane et inférieure sont mécaniquement interconnectées par le cadre de structure transversal 20 en matériau composite à base de fibres de carbone. Sur ce cadre carbone 20, un exemple de harnais plat et flexible 30 de liaison équipotentielle selon l'invention raccorde électriquement les supports 11 et 12 de la partie supérieure 10s à la traverse médiane 14.

Dans l'exemple de cheminement de la figure 2, le harnais 30 comporte deux connecteurs terminaux 32, fixés sur le support central 11 et sur la traverse médiane 14, ainsi qu'un connecteur intermédiaire 34 fixé sur un support latéral 12 de retour de courant. Le harnais est plat et flexible de manière à permettre un raccordement dans un volume disponible défini entre le cadre carbone 20 et une protection thermo-phonique 40 de la peau d'avion 5 (voir figure 1).

La vue en coupe de la figure 2a selon le plan II-II de la figure 2 montre la succession de cadres carbone 20 formés le long de la peau d'avion 5 à l'image de la structure illustrée en figure 1. Sur l'agrandissement de la figure 2b est schématisée la présence du harnais 30 selon l'invention en liaison avec le cadre 20.

La vue de face de la figure 3a illustre la faible épaisseur relative « e » d'un harnais 30 selon l'invention, de l'ordre de l'épaisseur d'un conducteur individuel, soit de l'ordre de 3mm pour des jauges 12 dans la calibration dite « AWG », hors des connecteurs intermédiaire 34 et terminaux 32.

La souplesse du harnais 30 résulte de celle de la nappe 50 de conducteurs métalliques 51, de préférence en aluminium ou en alliage d'aluminium, formant la base du harnais 30, comme illustrée par la partie écorchée de ce harnais sur la vue supérieure de la figure 3b. Dans une variante, des liens d'assemblage 52 perpendiculaires aux conducteurs 51 et répartis le long de la nappe 50 maintiennent parallèlement et de manière juxtaposés les conducteurs 51.

Dans l'exemple, le nombre de conducteurs 51 est égal à 10. Plus généralement, la section de chaque conducteur, le nombre de conducteurs, les liaisons entre les conducteurs et les connecteurs, ainsi que les liaisons entre les connecteurs et les pièces à raccorder sont déterminées de sorte à préserver la caractéristique équipotentielle de retour du courant électrique dans un espace d'installation compatible avec le volume disponible. Différents modèles de nappes de conducteurs formant ainsi une liaison équipotentielle peuvent ainsi être fabriqués et stockés.

Lors de la mise en place d'une nappe donnée, des outillages dédiés permettent de découper et de sertir chaque portion de nappe dans les connecteurs 32 et 34 pour réaliser le harnais souhaité. La connectique du harnais est ainsi adaptable en fonction de la configuration et des dimensions de l'installation à réaliser. En particulier, cette connectique peut s'adapter à la résistivité de la liaison à connecter, du courant de transit ou de surintensité, du nombre de points de fixation et de l'encombrement de l'installation ainsi que du nombre de pièces à raccorder. Des marques de repère de pose 31 sont formées sur l'enveloppe 60 pour être alignées avec des éléments de structure (voir la description d'un exemple de montage du harnais en référence à la figure 10a).

La géométrie des connecteurs permet de réduire leur masse totale au strict minimum. En particulier, l'épaisseur « e » des connecteurs 32 et 34 est à peine supérieure au diamètre maximum des conducteurs 51 afin de conserver robustesse compatible avec la présence d'alvéoles ou de cavités qui les traversent.

Les connecteurs sont avantageusement constitués par un alliage d'aluminium pour usage électrique, et présentent donc une faible résistivité. Un traitement de surface des connecteurs (nickelage, étamage, argenture,...) est de préférence réalisée pour que cette surface soit peu résistive et forme des liaisons électriques en interface avec un ajustement serré par frettage avec les supports 11, 12, et les traverses 14, 16 devant être raccordés (cf. figure 2). Ainsi, les risques de corrosion galvanique au niveau de la liaison électrique sont éliminés. Dans un mode préférentiel, les connecteurs sont fixés aux supports à travers des ouvertures 54.

La nappe est également modulaire afin de faciliter son adaptabilité : le nombre de conducteurs ainsi que leur section, les dimensions des connecteurs, l'épaisseur et la largeur de la nappe, et le nombre de connecteurs intermédiaires sont ajustables. De plus, les interfaces électriques et mécaniques de raccordement sont adaptables à la pièce à raccorder.

La nappe 50 est recouverte d'une enveloppe externe de protection 60 en matériau plastique PVF (polyfluorovinyle) ou PTFE (polytétrafluoroéthylène) ou équivalent, formant une gaine de protection mécanique. Cette enveloppe 60 permet également d'assurer les isolations électrochimique et électrique du harnais avec le cadre carbone.

La finition au niveau des connecteurs terminaux 32 et intermédiaires 34 est assurée par des tronçons de gaine polyoléfine thermo-rétractable formant une enveloppe commune 62. Cette enveloppe commune emprisonne, sous une de ses extrémités, les bords 60b de l'enveloppe externe 60 et recouvre partiellement les connecteurs terminaux 32 et intermédiaires 34 à son autre extrémité. Elle protège ainsi mécaniquement, en les recouvrant, les étanchéités individuelles réalisées sur chaque conducteur 51 de la nappe 50. Une description plus précise sera fournie en référence à l'assemblage des figures 8a et 8b.

Les vues frontale et en coupe IV-IV des figures 4a et 4b, illustrent la nappe 50 de conducteurs 51, solidarisés, dans l'exemple, par des liens d'assemblage 52 régulièrement espacés le long de la nappe 50. Le pas entre deux liens est également adapté afin de permettre à la nappe plate ainsi formée de garder suffisamment de souplesse. Selon les cas, ces liens d'assemblage peuvent aussi ne pas exister.

Chaque conducteur 51 est composé de brins d'aluminium élémentaires 55 groupés en toron, comme illustré par la vue en coupe de la figure 5. Le conducteur 51 présente dans cet exemple, bien entendu non limitatif, une jauge « AWG 12 » soit un diamètre de l'ordre de 2 mm. Afin de gagner en souplesse et en masse, les conducteurs sont avantageusement nus, c'est-à-dire sans isolant électrique.

Les connecteurs terminaux 32, tel que celui illustré par la vue frontale de la figure 6a et par la vue agrandie de la figure 6b, possèdent des alvéoles individuelles alignés 57 s'étalant sur toute la largeur d'un côté 32c de connecteur, chaque alvéole étant apte à recevoir une extrémité de conducteur 51 pour y être sertie. Alternativement, les conducteurs 51 sont fixés dans les alvéoles 57 par soudage, frettage, compactage, ultrasons, etc. Dans le cas des connecteurs terminaux, les alvéoles 57 sont des cavités borgnes, formées le long du bord 34b de ces connecteurs.

Les connecteurs terminaux 32 sont raccordés aux pièces métalliques de support 11 et de traverse 14 (figure 2) par des fixations et interfaces appropriées. La plage de contact électrique 54c qui entoure l'ouverture de fixation 54 est étendue afin de ne pas excéder des limites déterminées d'échauffement par effet Joule.

Dans l'exemple, les fixations sont effectuées par des vis à travers les ouvertures 54. Le connecteur terminal illustré 32 possède un axe de symétrie longitudinal X'X avec une avancée 32a en pointe, l'ouverture 54 étant réalisé sensiblement au centre de cette extrémité. Une telle interface de fixation peut recevoir un soyage, un pliage selon un angle donné, etc. Selon d'autres variantes, l'interface peut être à déconnexion rapide, par ¼ de tour ou équivalent.

La liaison entre les conducteurs 51 et le connecteur terminal 32 est étanchéifiée par enduction d'une résine d'étanchéité dans des zones dites d'étanchéité 45, par exemple de la résine polyester, époxy ou équivalent, recouvertes d'un manchon thermo-rétractable 46. Les conducteurs sont ainsi étanchéifiés individuellement.

S'agissant plus précisément des connecteurs intermédiaires 34, la vue frontale de la figure 7 en illustre un exemple. De même que pour les connecteurs terminaux, les connecteurs intermédiaires 34 sont raccordés aux pièces métalliques de support 12 (figure 2) par des fixations et interfaces appropriées. L'étendue de la plage de contact électrique 56a qui entoure l'ouverture de fixation 56 est optimisée en fonction du dégagement thermique et les fixations sont effectuées, par exemple, par des vis à travers les ouvertures 56.

De même, l'interface du connecteur intermédiaire multipoints 34 avec la nappe plate 50 est réalisée par insertion de chaque conducteur 51 dans une alvéole individuelle 58.

Ces alvéoles sont constituées par des cavités longitudinalement traversantes 58 et les conducteurs 51 sont fixés dans ces cavités comme dans les alvéoles des connecteurs terminaux. L'étanchéité est réalisée en liaison avec chacun des côtés 34c du connecteur 34, en reproduisant celle décrite pour les connecteurs terminaux 32 en référence aux figures 6a et 6b : combinaison d'une résine d'étanchéité et d'un manchon thermo-rétractable 46. Cette solution présente les avantages suivants :
- pas de coupure des conducteurs 51 qui forment une liaison équipotentielle, ce qui entraîne un gain de résistance de contact et une augmentation de la fiabilité de la liaison ;
- gain en masse ;
- possibilité de fixation partielle de chaque conducteur dans les alvéoles du connecteur intermédiaire 34 (fixation par sertissage ou équivalent, comme pour la fixation dans les connecteurs terminaux), à proximité de l'un et/ou l'autre côté 34c, au niveau des bords 34b : la fixation sur un seul côté permet l'économie de l'autre fixation, mais entraîne le doublement de la résistance de contact entre le conducteur et le connecteur intermédiaire.

L'interface du connecteur intermédiaire 34 avec d'autres pièces métalliques de l'avion est adaptée aux besoins spécifiques. Ainsi, les connecteurs intermédiaires 34 peuvent présenter une seule avancée 35 avec une ouverture de fixation 54 par vis (cf. figures 3a et 3b) ou plusieurs avancées avec les mêmes types de fixation.

Comme pour les connecteurs terminaux, cette interface peut recevoir un soyage, un pliage à un angle donné ou équivalent. Egalement, d'autres variantes de cette interface peuvent être à déconnexion rapide, ¼ de tour ou équivalent.

Ces connecteurs intermédiaires permettent de connecter un câble de retour de courant d'un équipement au plus près de cet équipement, en formant un « té » de dérivation.

Des vues frontales globales d'un exemple d'assemblage d'un harnais 30 selon l'invention dans deux étapes de recouvrement par une enveloppe commune sont illustrées en référence aux figures 8a et 8b. Le harnais comporte la nappe de conducteurs 50 avec des connecteurs terminaux multipoints 32 et un connecteur intermédiaire multipoints 34.

L'assemblage de la nappe 50 de conducteurs nus en aluminium 51 avec les connecteurs terminaux multipoints 32 et le connecteur intermédiaire multipoints 34 est réalisé par exemple par sertissage : les conducteurs 51 sont sertis en une seule opération grâce à un outillage dédié dans chaque connecteur 32 et 34. Après sertissage, les performances électriques et mécaniques sont atteintes :
- la valeur de résistance électrique d'un sertissage est strictement inférieure à la valeur de résistance électrique d'une longueur de conducteur équivalente sans sertissage ;
- dans un connecteur donné, les résistances électriques des sertissages sont toutes situées dans une plage de variation des unes par rapport aux autres de l'ordre de 5%, ce qui permet d'éviter la circulation de courants inhomogènes dans les conducteurs 51 de la nappe 50 ;
- la valeur de la résistance à la traction est au moins égale à la valeur de la limite élastique du conducteur 51.

Le processus de réalisation d'un exemple de harnais plat et flexible de liaison équipotentielle commence par débiter des longueurs nécessaires de conducteurs 51 en alliage d'aluminium, avantageusement préconstitués en nappe plate. La préparation des extrémités 51e à sertir commence par le retrait, si nécessaire, des liens d'assemblages 52 susceptibles de gêner l'assemblage de l'extrémité à sertir. Chaque conducteur 51 est ensuite ajusté précisément sur un gabarit (non représenté). La coupe des conducteurs est réalisée à l'aide d'un outillage adapté.

Chaque conducteur 51 est alors introduit dans l'alvéole 57 ou la cavité 58 qui lui est destinée dans les connecteurs terminaux 32 ou intermédiaire 34. Les croisements de conducteurs 51 ne sont pas autorisés.

L'opération commence (figure 8a) par le recouvrement de la nappe de conducteurs 50 de tronçons 60T constituant l'enveloppe externe 60, formés par l'enroulement d'un film souple de protection mécanique, d'isolation électrique et électrochimique, par exemple en PTFE, préencollé sur sa face interne. Des marques de montage 31 sont formées sur les tronçons 60T.

Puis la nappe entre les connecteurs 32, 34 et l'enveloppe externe 60 est recouverte d'une gaine thermo-rétractable 62 par tronçons 62T (figure 8b). Ces tronçons forment l'enveloppe commune 62 en recouvrant, d'une part, les bords 60b des tronçons 60T de l'enveloppe externe 60 et, d'autre part, les zones 46 de liaison des conducteurs 51 aux connecteurs 32, 34, jusqu'au recouvrement des bords 32b et 34b de ces connecteurs, afin de garantir la protection mécanique des zones d'étanchéité 46 des conducteurs, et la finition au niveau des connecteurs 32,34.

Le montage d'un harnais 30 ainsi protégé sur une portion de la protection thermo-phonique 40 est illustré par la vue frontale de la figure 9a et en coupe (selon les plans BB et CC) des figures 9b et 9c. Le harnais 30 chemine sous des supports entre la protection 40 et l'habillage cabine 1. Il est adossé à la protection 40 par des supports 71 et 72 respectivement rigides et souples. chaque support rigide 71 (figure 9c) a une forme en « L » dans l'exemple et entoure la nappe 50 de conducteurs 51 sur une branche du « L ». Il est fixé à la protection thermo-phonique 40 par l'autre branche du « L ».

Entre deux supports rigides 71, des supports souples - en matière textile ou équivalent - forment des passants 72 (figure 9b). Ces passants sont liés à la protection 40 par des moyens appropriés : couture, collage, soudage, bande auto-agrippante ou équivalent. Ces passants suppriment les ventres éventuels que pourrait former le harnais 30 entre deux supports rigides 71 et ainsi éviter son usure prématurée par frottement.

Le montage d'un harnais 30 sur une portion linéaire du cadre carbone 20, avant la mise en place de la protection thermo-phonique et du panneau d'habillage 1 de la cabine, est illustré par la vue de profil de la figure 10a. Préalablement à l'installation du harnais, une bande adhésive double face 73 est collée sur la face du harnais 30 à solidariser au cadre 20.

L'installation du harnais 30 commence par l'alignement d'une marque de repère de départ de pose 31 formée sur le harnais 30 avec un élément de structure du cadre 20, un bord de pièce de maintien de cadre 21 dans l'exemple illustré.

L'opérateur 100 retire ensuite progressivement la pellicule à peler 74 pour libérer la face adhésive de la bande 73, et vient appliquer le harnais 30 sur le cadre 20 afin de le coller. Ce collage, non structurel, permet de maintenir le harnais en place afin de faciliter sa pose et sa fixation. Le positionnement du harnais 30 est alors assuré et sécurisé par des épingles à ressort 80 qui viennent se ficher en pression dans des encoches de logement 81 formées sur le cadre 20. Avantageusement, le pas et la forme des épingles 80 est variable et adapté aux environnements et aux interfaces mécaniques.

Sur une portion coudée 22 du cadre 20, comme illustré par le schéma de la figure 10c, la surface courbée peut accueillir le harnais 30. en effet, grâce à la souplesse de la nappe de conducteurs, le harnais 30 peut être installé sur des surfaces concaves, convexes ou plus complexes.

L'agrandissement de la figure 10b montre une épingle à ressort 80. Cette épingle est composée de deux bras coudés 80a et 80b reliés par un pont 80c. A chaque extrémité de bras 80a, 80b une pliure avec l'extrémité 80p est formée pour être logée dans une encoche 81 du cadre 20. Comme illustré par la vue de la figure 10d selon la direction V-V de la figure 10b, les extrémités 80p sont désaxées vers l'extérieur d'un angle α par rapport aux branches 80a et 80b. Cet angle α est adapté pour rendre l'épingle naturellement imperdable des lors qu'elle est installée dans son logement 81 par l'effet ressort de ses branches 80a et 80b.

Dans certaines zones, le positionnement du harnais 30 par collage sur le cadre 20 est rendu plus difficile du fait de l'environnement mécanique ou de l'encombrement. Comme le montre la figure 11 dans la zone de la partie supérieure 10s du réseau retour de courant, le harnais 30 est positionné à l'aide de fixations locales 91 (colliers, brides, etc.) au cadre 20. Sur les supports 11 et 12, la fixation est de préférence réalisée à l'aide des connecteurs terminal 32 et intermédiaire 34.

A titre d'exemples, deux fixations par enroulement du harnais 30 dans des colliers de serrage particuliers sont représentées sur les figures 12a et 12b. En référence à la figure 12a, le harnais 30 est enroulé localement et maintenu par un collier de frettage en matériau plastique 91a en liaison à un élément de structure 5a via un support fixe 92. Sur la figure 12b, le harnais 30 est enroulé par un collier de type P 91b, utilisé en standard sur les avions pour la fixation de harnais. Le collier P 91b permet également une fixation sur l'élément de structure 5a via un élément de montage 92b.

L'invention n'est pas limitée aux exemples de réalisation décrits et représentés. Il est par exemple possible de prévoir des connecteurs intermédiaires hybrides constitués en partie par des cavités traversantes et par des alvéoles borgnes pour loger les conducteurs. En outre, les conducteurs sont de préférence en aluminium mais pourraient également être éventuellement en alliage de cuivre. Par ailleurs, la solidarisation des connecteurs aux pièces à raccorder peut également être réalisée par vissage, rivetage, bridage, soudure, brasage ou tout moyen équivalent.

## Revendications

1. Harnais convenant à la liaison équipotentielle des pièces métalliques structurales (10 ; 11, 12, 14, 16) cheminant le long d'une structure de protection (40), destiné à être situé dans un volume disponible (7) s'étendant entre un cadre transversal (20), en matériau composite à base de fibres de carbone dit cadre carbone, et un panneau d'habillage (1) pour établir des liaisons équipotentielles entre les parties d'un réseau de retour de courant, comportant des connecteurs intermédiaires (34), des connecteurs terminaux (32), un dispositif conducteur (50) constituant une liaison équipotentielle entre les connecteurs intermédiaires (34) de raccord aux pièces métalliques (12) par dérivation sans coupure des conducteurs, et les connecteurs terminaux (32) destinés à être couplés aux pièces métalliques de retour de courant (11, 14), et au moins une enveloppe de protection (60, 62) recouvrant le dispositif (50) et des zones d'extrémité (32b, 34b) des connecteurs (32, 34), cette enveloppe (60, 62) étant destinée à assurer la protection mécanique, électrique et électrochimique du harnais en liaison avec la protection thermo-phonique (40) et/ou avec le cadre carbone (20) ou le panneau d'habillage (1), **caractérisé en ce que** ledit dispositif conducteur est une nappe (50) plate et flexible selon ses directions longitudinale et transversale, formée de conducteurs (51) non isolés, agencés parallèlement et de manière juxtaposée et **en ce que** les connecteurs sont modulaires et multipoints en référence au nombre de conducteurs (51) et sont liés à des moyens d'étanchéité locaux (45, 46) au niveau de chaque conducteur (51) à connecter, les conducteurs (51) étant ainsi étanchéifiés individuellement.

2. Harnais selon la revendication 1, dans lequel chaque conducteur (51) est constitué de brins élémentaires (55) en aluminium et groupés en toron.

3. Harnais selon l'une des revendications 1 ou 2, dans lequel les connecteurs (32, 34) sont traités en surface par un traitement choisi parmi le nickelage, l'étamage et l'argenture, pour réaliser un assemblage par frettage en ajustement serré avec les pièces correspondantes à raccorder (11, 12, 14, 16) afin d'empêcher une corrosion galvanique.

4. Harnais selon l'une quelconque des revendications précédentes, dans lequel les connecteurs terminaux (32) et intermédiaires (34) comportent des alvéoles alignées (57, 58), chaque conducteur (51) étant inséré et fixé dans une alvéole (57, 58).

5. Harnais selon la revendication précédente, dans lequel les alvéoles des connecteurs terminaux (32) sont des cavités borgnes (57), et les alvéoles des connecteurs intermédiaires (34) sont traversantes (58).

6. Harnais selon l'une quelconque des revendications précédentes, dans lequel l'enveloppe de protection se compose d'une enveloppe externe (60) recouvrant la nappe (50) et d'une enveloppe commune (62) emprisonnant les bords (32b, 34b ; 60b) des connecteurs (32, 34) et de l'enveloppe externe (60).

7. Harnais selon la revendication précédente, dans lequel l'enveloppe externe (60) est constituée de tronçons (60T) en matériau à base de polyfluorovinyle dit PVF ou de polytétrafluoroéthylène dit PTFE, apte à réaliser une protection mécanique, ainsi qu'une isolation électrochimique et électrique avec le cadre carbone et/ou la protection thermo-phonique ou le panneau d'habillage.

8. Harnais selon l'une des revendications 6 ou 7, dans lequel l'enveloppe commune (62) est constituée de tronçons (62T) de gaine polyoléfine thermo-rétractable ou de surmoulages localisés en matériau polymère thermoplastique ou thermodurcissable, aptes à réaliser la protection mécanique de zones d'étanchéité (45) des conducteurs (51) en liaison avec des côtés (32c, 34c) des connecteurs (32, 34).

9. Harnais selon la revendication précédente, dans lequel les moyens d'étanchéité locaux sont constitués de manchons thermo-rétractables (46) entourant les conducteurs (51) enduits de produit d'étanchéité au niveau des zones d'étanchéité (45) de sorte à étanchéifier individuellement chaque conducteur (51).

10. Harnais selon l'une quelconque des revendications précédentes, dans lequel les connecteurs (32, 34) sont en alliage d'aluminium à faible résistivité.

11. Procédé de montage d'un harnais selon l'une quelconque des revendications précédentes sur un cadre de fuselage d'avion en matériau composite, **caractérisé en ce qu'**un revêtement adhésif double face (70) est collé sur l'enveloppe externe (60) du harnais (30) pour une installation directe de la nappe (50) sur le cadre carbone (20), **en ce que** la pellicule à peler (73) est progressivement retirée et le harnais (30) appliqué sur le cadre (20), **en ce que** le positionnement du harnais est alors assuré et sécurisé par des épingles à ressort (80) venant se ficher en pression dans des logements (81) préalablement formés dans le cadre (20), **en ce que** les connecteurs (32, 34) sont solidarisés aux pièces (11, 12, 14, 16) à raccorder, et **en ce que**, dans le cas d'une installation de la nappe entre la protection thermo-phonique et l'habillage cabine, des supports rigides (71) et des supports souples (72) de la nappe (50) sont prévus le long de la protection thermo-phonique (40).

12. Procédé de montage d'un harnais selon la revendication précédente sur un cadre de fuselage d'avion en matériau composite, **caractérisé en ce que** le harnais est positionné par des épingles (80) à deux branches (80a, 80b) d'extrémités (80p) désaxées vers l'extérieur d'un angle (α) adapté de sorte à rendre l'épingle (80) imperdable des lors qu'elle est installée dans son logement (81).

13. Procédé de montage selon la revendication précédente, dans lequel le harnais (30) est également supporté entre deux connecteurs (32, 34) par des fixations locales (91), en particulier par enroulement dans des colliers de serrage (91a, 91b) en liaison avec un élément de structure (5a).

## Patentansprüche

1. Kabelstrang, das zur Potentialausgleichsverbindung der metallischen Strukturteile (10; 11, 12, 14, 16) geeignet ist, die entlang einer Schutzstruktur (40) verlaufen, der dazu bestimmt ist, in einem verfügbaren Volumen (7) zu liegen, das sich zwischen einem Quergerüst (20) aus Verbundmaterial auf der Basis von Kohlenstofffasern, Carbon-Gerüst genannt, und einer Verkleidungsplatte (1) erstreckt, um Potentialausgleichsverbindungen zwischen den Teilen eines Rückstromnetzes, das Zwischensteckverbinder (34), Endsteckverbinder (32) umfasst, herzustellen, wobei eine leitende Vorrichtung (50) eine Potentialausgleichsverbindung zwischen den Zwischensteckverbindern (34) zum Anschließen an die Metallteile (12) durch unterbrechungsfreie Abzweigung der Leiter bildet, und die Endsteckverbinder (32), die dazu bestimmt sind, mit den metallischen Teilen des Rückstroms (11, 14) gekoppelt zu werden, und mindestens einen Schutzmantel (60, 62), der die Vorrichtung (50) und Endzonen (32b, 34b) der Steckverbinder (32, 34) abdeckt, wobei dieser Mantel (60, 62) dazu bestimmt ist, für den mechanischen, elektrischen und elektrochemischen Schutz des Kabelstrangs in Verbindung mit dem Wärme-Schallschutz (40) und/oder mit dem Carbon-Gerüst (20) oder der Verkleidungsplatte (1) zu sorgen, **dadurch gekennzeichnet, dass** die leitende Vorrichtung eine flache und biegsame Lage (50) ist, entlang ihrer Längs- und Querrichtung, die aus nicht isolierten Leitern (51) gebildet ist, die parallel und nebeneinander angeordnet sind, und dadurch, dass die Steckverbinder Modular- und Mehrfachsteckverbinder in Bezug auf die Anzahl von Leitern (51) sind und mit lokalen Abdichtungsmitteln (45, 46) in dem Bereich jedes zu verbindenden Leiters (51) verbunden sind, wodurch die Leiter (51) individuell abgedichtet sind.

2. Kabelstrang nach Anspruch 1, wobei jeder Leiter (51) aus Elementardrähten (55) aus Aluminium besteht, und in Litze zusammengefasst sind.

3. Kabelstrang nach einem der Ansprüche 1 oder 2, wobei die Steckverbinder (32, 34) auf der Oberfläche durch eine Behandlung behandelt sind, die aus Vernickeln, Verzinnen und Versilbern ausgewählt ist, um einen Verbund durch Armierung in enger Passung mit den entsprechenden anzuschließenden Teilen (11, 12, 14, 16) herzustellen, um eine galvanische Korrosion zu verhindern.

4. Kabelstrang nach einem der vorstehenden Ansprüche, wobei die Endsteckverbinder (32) und die Zwischensteckverbinder (34) ausgerichtete Zellen (57, 58) beinhalten, wobei jeder Leiter (51) in eine Zelle (57, 58) eingeführt und befestigt wird.

5. Kabelstrang nach dem vorstehenden Anspruch, wobei die Zellen der Endsteckverbinder (32) Blindhohlräume (57) sind, und die Zellen der Zwischensteckverbinder (34) durchquert (58) sind.

6. Kabelstrang nach einem der vorstehenden Ansprüche, wobei der Schutzmantel aus einem Außenmantel (60), der die Lage (50) abdeckt, und einem gemeinsamen Mantel (62), der die Ränder (32b, 34b; 60b) der Steckverbinder (32, 34) und des Außenmantels (60) einschließt, besteht.

7. Kabelstrang nach dem vorstehenden Anspruch, wobei der Außenmantel (60) aus Abschnitten (60T) aus Material auf der Basis von Polyfluorvinyl, PVF genannt, oder Polytetrafluorethylen, PTFE genannt, besteht, das geeignet ist, um einen mechanischen Schutz herzustellen, sowie aus einer elektrochemischen und elektrischen Isolation mit dem Carbon-Gerüst und/oder dem Wärme-Schallschutz oder der Verkleidungsplatte.

8. Kabelstrang nach einem der Ansprüche 6 oder 7, wobei der gemeinsame Mantel (62) aus Abschnitten (62T) aus wärmeschrumpfbarer Polyolefin-Hülle oder lokalen Umspritzungen aus Thermoplast- oder wärmehärtbarem Polymer besteht, die geeignet sind, um den mechanischen Schutz der Abdichtungszonen (45) der Leiter (51) in Verbindung mit den Seiten (32c, 34c) der Steckverbinder (32, 34) herzustellen.

9. Kabelstrang nach dem vorstehenden Anspruch, wobei die lokalen Abdichtungsmittel aus wärmeschrumpfbaren Muffen (46) bestehen, die die Leiter (51) umgeben, die in dem Bereich der Abdichtungszonen (45) derart mit einem Abdichtungsprodukt beschichtet sind, um jeden Leiter (51) individuell abzudichten.

10. Kabelstrang nach einem der vorstehenden Ansprüche, wobei die Steckverbinder (32, 34) aus Aluminiumlegierung mit niedrigem spezifischem Widerstand bestehen.

11. Verfahren zur Montage eines Kabelstrangs nach einem der vorstehenden Ansprüche auf einem Flugzeugrumpfgerüst aus Verbundmaterial, **dadurch gekennzeichnet, dass** für eine direkte Installation der Lage (50) auf dem Carbon-Gerüst (20) eine doppelseitige Klebebeschichtung (70) auf den Außenmantel (60) des Kabelstrangs (30) geklebt wird, dadurch, dass die Abziehfolie (73) allmählich abgezogen wird, und der Kabelstrang (30) an dem Gerüst (20) angelegt wird, dadurch, dass das Positionieren des Kabelstrangs somit sichergestellt und durch Federstecknadeln (80), die unter Druck in Aufnahmen (81) gesteckt werden, die vorab in dem Gerüst (20) gebildet werden, abgesichert wird, dadurch, dass die Steckverbinder (32, 34) fest mit den anzuschließenden Teilen (11, 12, 14, 16) verbunden werden, und dadurch, dass im Falle einer Installation der Lage zwischen dem Wärme-Schallschutz und der Kabinenverkleidung starre Träger (71) und biegsame Träger (72) der Lage (50) entlang des Wärme-Schallschutzes (40) vorgesehen sind.

12. Verfahren zur Montage eines Kabelstrangs nach dem vorstehenden Anspruch auf einem Flugzeugrumpfgerüst aus Verbundmaterial, **dadurch gekennzeichnet, dass** der Kabelstrang durch Stecknadeln (80) mit zwei Schenkeln (80a, 80b) von Enden (80p), die um einen angemessenen Winkel (α) nach außen versetzt sind, derart positioniert wird, dass die Stecknadel (80) unverlierbar gemacht wird, sobald sie in ihrer Aufnahme (81) installiert ist.

13. Verfahren zur Montage nach dem vorstehenden Anspruch, wobei der Kabelstrang (30) auch zwischen zwei Steckverbindern (32, 34) durch lokale Befestigungen (91), insbesondere durch Aufrollen in Spannschellen (91a, 91b) in Verbindung mit einem Strukturelement (5a) getragen wird.

## Claims

1. Loom suitable for equipotential connection between metal structural pieces (10; 11, 12, 14, 16) routed along a protection structure (40), intended to be located in an available volume (7) extending between a transverse frame (20), made of a carbon-fibre-based composite material and known as a carbon frame, and a lining panel (1), to establish equipotential connections between the parts of a current return network, comprising intermediate connectors (34), terminal connectors (32), a conducting device (50) forming an equipotential connection between the intermediate connectors (34), for linking to the metal pieces (12) by branching without the conductors being cut, and the terminal connectors (32) intended to be coupled to the metal current return pieces (11, 14), and at least one protective jacket (60, 62) covering the device (50) and end regions (32b, 34b) of the connectors (32, 34), this jacket (60, 62) being intended to provide mechanical, electrical and electrochemical protection of the loom in connection with the heat and sound protection (40) and/or with the carbon frame (20) or the lining panel (1), **characterised in that** said conducting device is a planar layer (50), flexible in the longitudinal and transverse directions thereof, formed of non-insulated conductors (51) arranged parallel side by side, and **in that** the connectors are modular and multi-point as regards the number of conductors (51) and are connected to local leak-proofing means (45, 46) at each conductor (51) to be connected, the conductors being individually sealed thereby.

2. Loom according to claim 1, wherein each conductor (51) is formed of elementary aluminium blades (55) grouped in a strand.

3. Loom according to either claim 1 or claim 2, wherein the connectors (32, 34) are surface-treated, using a treatment selected from nickel-plating, tinning and silvering, to form an assembly by shrink-fitting to the corresponding pieces (11, 12, 14, 16) to be connected so as to prevent galvanic corrosion.

4. Loom according to any of the preceding claims, wherein the terminal and intermediate connectors (32, 34) comprise aligned recesses (57, 58), each conductor (51) being inserted into and fixed in a recess (57, 58).

5. Equipotential connecting loom according to the preceding claim, wherein the recesses of the terminal connectors (32) are blind holes (57), and the recesses of the intermediate connectors (34) are through-holes (58).

6. Loom according to any of the preceding claims, wherein the protective jacket consists of an external jacket (60) covering the layer (50) and a shared jacket (62) enclosing the edges (32b, 34b; 60b) of the connectors (32, 34) and of the external jacket (60).

7. Loom according to the preceding claim, wherein the external jacket (60) is formed of portions (60T) of material based on polyvinyl fluoride, known as PVF, or polytetrafluoroethylene, known as PTFE, suitable for providing mechanical protection, as well as electrochemical and electrical insulation with the carbon frame and/or the heat and sound protection or the lining panel.

8. Loom according to either claim 6 or claim 7, wherein the shared jacket (62) is formed of portions (62T) of heat-shrinkable polyolefin sheath or localised overmouldings of thermoplastic or thermosetting polymer material suitable for providing mechanical protection for leak-proof regions (45) of the conductors (51) in connection with the sides (32c, 34c) of the connectors (32, 34).

9. Loom according to the preceding claim, wherein the local leak-proofing means are formed of heat-shrinkable sleeves (46) surrounding the conductors (51), which are coated with leak-proofing product at the leak-proofing regions (45) so as to leak-proof each conductor (51) individually.

10. Loom according to any of the preceding claims, wherein the connectors (32, 34) are made of low-resistivity aluminium alloy.

11. Method for mounting a loom according to any of the preceding claims on an aeroplane fuselage frame made of composite material, **characterised in that** a double-sided adhesive coating (70) is glued to the external jacket (60) of the loom (30) for direct installation of the layer (50) on the carbon frame (20), **in that** the peel-off film (73) is gradually pulled back and the loom (30) is applied to the frame (20), **in that** the positioning of the loom is subsequently provided and secured by spring pins (80), which come to be pressed into compartments (81) formed in the frame (20) in advance, **in that** the connectors (32, 34) are rigidly fixed to the pieces (11, 12, 14, 16) to be linked, and **in that**, if the layer is installed between the heat and sound protection and the cabin lining, rigid supports (71) and flexible supports (72) of the layer (50) are provided along the heat and sound protection (40).

12. Method for mounting a loom according to the preceding claim on an aeroplane fuselage frame made of composite material, **characterised in that** the loom is positioned by way of pins (80) having two legs (80a, 80b) having ends (80p) axially offset towards the outside by an angle (α) suitable for making the pin (80) unreleasable once it is installed in the compartment (81) thereof.

13. Mounting method according to the preceding claim, wherein the loom (30) is also supported between two connectors (32, 34) by local fastenings (91), in particular by wrapping in hose clamps (91a, 91b) in connection with a structural element (5a).
